# EUROPÄISCHE PATENTSCHRIFT

(11) **EP 0 702 030 B1**
(45) Veröffentlichungstag und Bekanntmachung des Hinweises auf die Patenterteilung: **21.03.2001**
(21) Anmeldenummer: 95114875.8
(22) Anmeldetag: 25.05.1992
(51) Int. Cl.: C08F 4/642, C08F 10/00

(54) **Verfahren zur Herstellung von Polyolefinen mit breiter Molmassenverteilung**
Process for preparing olefin polymers with large molecular weight distribution
Procédé de préparation de polyoléfines à large répartition de poids moléculaire

(30) Priorität: 27.05.1991 DE 4117259
(43) Veröffentlichungstag der Anmeldung: 20.03.1996
(62) Teilanmeldung aus: 92108788.8
(73) Patentinhaber: TARGOR GmbH, 55116 Mainz (DE)
(72) Erfinder: Winter, Andreas, Dr., D-61479 Glashütten (DE); Dolle, Volker, Dr., D-64625 Bensheim (DE); Spaleck, Walter, Dr., D-65835 Liederbach (DE)

(56) Entgegenhaltungen:
- EP-A- 0 128 046
- EP-A- 0 226 463
- EP-A- 0 279 586
- EP-A- 0 344 887
- EP-A- 0 399 348

## Beschreibung

Von Metallocenkatalysatoren in Verbindung mit Aluminoxanen ist bekannt, daß sie Olefine zu Polyolefinen mit enger Molmassenverteilung (M_{w}/Mₙ von 2-3) polymerisieren können (J. Polym. Sci, Pol. Chem. Ed. 23 (1985) 2117; EP-A 302 424). Solche eng verteilten Polyolefine eignen sich beispielsweise für Anwendungen im Präzisionsspritzguß, Spritzguß allgemein und für die Faserherstellung. Für zahlreiche Anwendungen wie beispielsweise Tiefziehen, Extrudieren, Hohlkörperblasformen sowie für die Herstellung von Polyolefinschäumen und Folien werden breitere oder bimodale Molmassenverteilungen gefordert.

Für Polyethylen wurde vorgeschlagen, solche Produkte durch Verwendung von zwei oder mehr Metallocenkatalysatoren bei der Polymerisation zu realisieren (EP-A 128 045); die beschriebenen Systeme sind jedoch achirale Katalysatoren und würden bei der Polymerisation von Propen ataktisches Polypropylen liefern. Ataktisches Polypropylen ist als Konstruktionswerkstoff jedoch ungeeignet.

Die Herstellung von Stereoblockpolypropylen mit M_{w}/Mₙ von 13- 15 ist aus DE-OS 3 640 924 bekannt. Diese Katalysatorsysteme sind ebenfalls nicht geeignet, Polyolefine hoher Taktizität zu bilden. Ferner sind die bei technisch relevanten Polymerisationstemperaturen realisierbaren Aktivitäten der Metallocene und die Molmassen der Polymerprodukte zu gering. Darüberhinaus liefern die vorgeschlagenen Katalysatoren bei solchen Polymerisationstemperaturen nur ataktisches Polymer.

In der EP-A 310 734 werden Katalysatorsysteme bestehend aus einer Mischung eines Hafnocens und eines Zirkonocens zur Herstellung von Polypropylen vorgeschlagen. Die Produkte haben breite bis bimodale Verteilungen mit M_{w}/Mₙ von 3,7 bis 10,3.

Unter Verwendung nur eines Hafnocenkatalysators wird bei einer bestimmten Polyerisationstemperatur gemäß EP-A 355 439 breitverteiltes Polypropylen erhalten.

Syndiotaktisches Polypropylen mit breiter Verteilung wird in der EP-A 387 691 (M_{w}/Mₙ bis 6,4) bei Verwendung eines Hafnocens beschrieben.

Gemeinsame Nachteile dieser Verfahren sind die für industrielle Anwendungen zu hohen Kosten für die Hafniumkatalysatoren in Verbindung mit ihrer niedrigen Polymerisationsaktivität, die zusätzlich eine umfassende kostenintensive Reinigung des hergestellten Polymers von Katalysatorresten erforderlich macht.

Es bestand somit die Aufgabe, ein Katalysatorsystem zu finden, welches die aus dem Stand der Technik bekannten Nachteile vermeidet.

Die Erfindung betrifft somit einen Katalysor, welcher aus einer Übergangsmetallkomponente (Metallocen) und einem Aluminoxan der Formel II 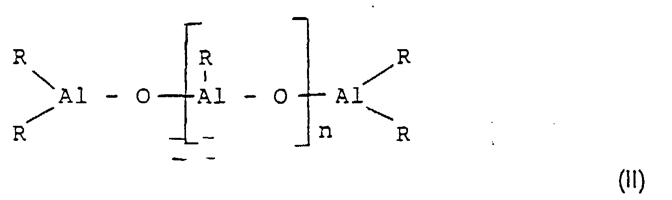 für den linearen Typ und/oder der Formel III 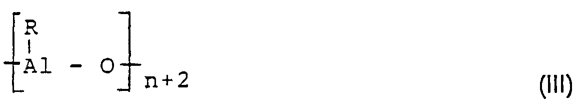 für den cyclischen Typ, wobei in den Formeln II und III die Reste R gleich oder verschieden sein können und eine C₁-C₆-Alkylgruppe, eine C₁-C₆-Fluoralkylgruppe, eine C₆-C₁₈-Arylgruppe, eine C₁-C₆-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung AIR₃ besteht, dadurch gekennzeichnet, daß als Übergangsmetallkomponente mindestens ein Zirkonocen der Formel la verwendet werden, welches Zirkonocen vorpolymerisiert oder auf einem Träger aufgebracht ist, 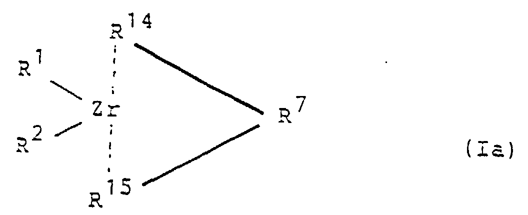 worin
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R⁷: 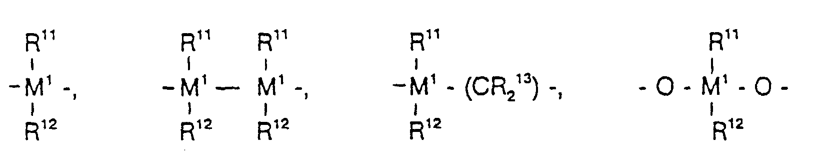 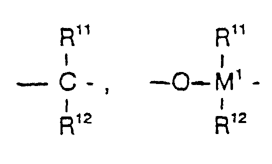 =BR¹¹ , =AIR¹¹, -Ge-, -Sn-, -O-, -S-, =SO, = SO₂, = NR¹¹, =CO, = PR¹¹ oder =P(O)R¹¹ ist,
wobei
- R¹¹, R¹² und R¹³: gleich oder verschieden sind und ein Wasserstoffatom, ein Halogenatom, eine C₁-C₁₀-Alkylgruppe C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀ Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden und
M¹ Silizium, Germanium oder Zinn ist,
- R¹⁴ und R¹⁵: gleich oder verschieden sind und einen Indenylrest bedenten, welcher noch zusätzliche Substituenten in der Bedeutung von R¹¹ trägt.
Alkyl steht für geradkettiges oder verzweigtes Alkyl. Halogen (halogeniert) bedeutet Fluor, Chlor, Brom oder Jod, bevorzugt Fluor oder Chlor.
R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.
- R⁷ ist: 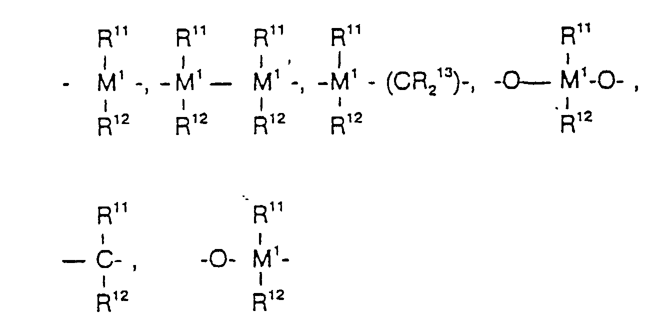 =BR¹¹, =AIR¹¹, -Ge-, -Sn-, -O-, -S-, =SO, =SO₂, =NR¹¹, =CO, =PR¹¹ oder =P(O)R¹¹, wobei R¹¹, R¹² und R¹³ gleich oder verschieden sind und ein Wasserstoffatom, ein Halogenatom, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹¹ und R¹² oder R¹¹ und R¹³ bilden jeweils zusammen mit den sie verbindenden Atomen einen Ring.
- M¹: ist Silizium, Germanium oder Zinn, bevorzugt Silizium und Germanium.
- R⁷: ist vorzugsweise =CR¹¹R¹², =SiR¹¹R¹², =GeR¹¹R¹², -O-, -S-, =SO, =PR¹¹ oder =P(O)R¹¹.

Bevorzugt sind R¹⁴ und R¹⁵ Indenyl, wobei dieser Grundkörper noch zusätzliche Substituenten in der Bedeutung von R¹¹ tragen kann.

Unter den in den Ausführungsbeispielen genannten Verbindungen Ia besitzen rac-Dimethylsilyl(2-methyl -1-indenyl)₂zirkondichlorid, rac-Diphenylsilyl(2-methyl-1-indenyl)₂zirkondichlorid, und rac-Phenyl(methyl)silyl(2-methyl-1-indenyl)₂zirkondichlorid besondere Bedeutung.

Die besonders bevorzugten Metallocene der Formel la sind solche bei denen R¹ und R² gleich oder verschieden sind und Methyl oder Chlor,
- R⁷ einen Rest: 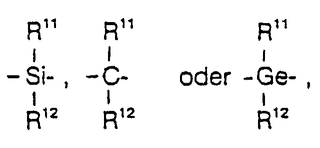
und
- R¹⁴ und R¹⁵: gleich oder verschieden sind, insbesondere die in den Ausführungsbeispielen aufgeführten Verbindungen la.

Besondere Bedeutung besitzen somit rac-Phenyl(methyl)silyl(indenyl)₂-zirkondichlorid, rac-Dimethylsilyl(indenyl)₂-zirkondichlorid, rac-Dimethylgermyl(indenyl)₂-zirkondichlorid,rac-Dimethylsilyl(indenyl)₂zirkondimethyl, rac-Phenyl(vinyl)silyl(indenyl)₂zirkondichlorid, 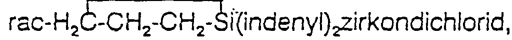 rac-Isopropyliden(indenyl)₂zirkondichlorid, rac-Dimethylsilyl(4,7-dimethyl-1-indenyl)₂-zirkondichlorid.

Die Metallocene mit C₃-Symmetrie (Unterfall von Verbindungen der Formel la) werden zur Herstellung von syndiotaktischem Anteil im Polyolefin eingesetzt.

Der Begriff C₃- Symmetrie bedeutet für die Zwecke der vorliegenden Erfindung, daß die entsprechenden Metallocene senkrecht zur Ebene, die von Zr, R¹ und R² aufgespannt wird, eine Spiegelebene besitzen. Die Winkelhalbierende von R¹-Zr-R² verläuft in dieser Spiegelebene. Diese Symmetriebetrachtung beschränkt sich auf einen Teil des Zirconocenmoleküls, d.h. die Brücke -(CR⁸R⁹)ₙ-R⁷-(CR⁸R⁹)ₘ-wird nicht berücksichtigt. Ferner ist der Begriff C₃-Symmetrie formal oder idealisiert zu verstehen. So bleiben z.B. Verschiebungen im genannten Molekülteil, die durch die Brücke hervorgerufen werden können und nur einer Strukturaufklärung zugänglich sind, für die Zwecke der vorliegenden Erfindung außer Betracht.

Die chiralen Metallocene werden als Racemat zur Herstellung von hochisotaktischen Polyolefinen eingesetzt.Verwendet werden kann aber auch die reine R- oder S-Form. Mit diesen reinen stereoisomeren Formen ist ein optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen - weiche Formkörper beispielsweise - kann dies durchaus wünschenswert sein.

Die Trennung der Stereoisomeren ist im Prinzip bekannt.

Die Metallocene la können prinzipiell nach folgendem Reaktionsschema hergestellt werden: 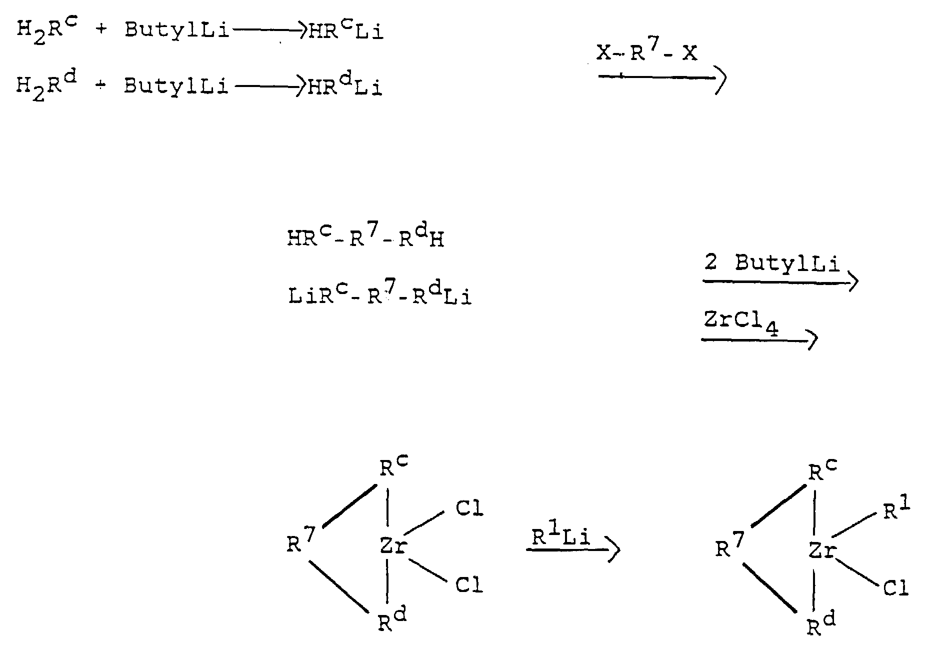 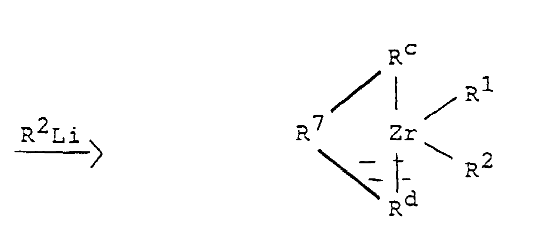 X = Cl, Br, I, O-Tosyl; 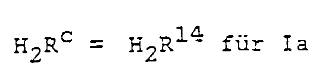 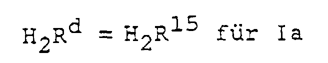 oder 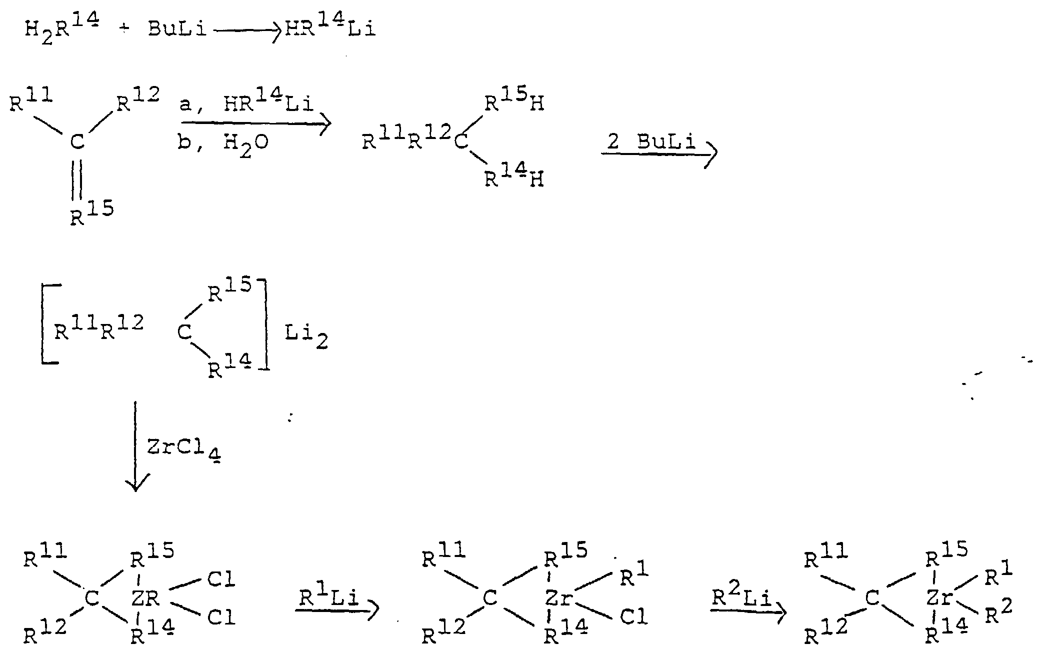 (vgl. Journal of Organomet. Chem. (1985) 63-67 und EP-A 320762)

Die Auswahl der Metallocene für die Polymerisation von Olefinen zu breit- oder mehrmodal verteiltem Polyolefin kann durch jeweils eine Testpolymerisation pro Metallocen erfolgen.

Dabei wird das Olefin zum Polyolefin polymerisiert und dessen mittleres Molekulargewicht M_{w} sowie dessen Molmassenverteilung M_{w}/Mₙ mittels

Gelpermeationschromatographie bestimmt. Je nach gewünschter Molmassenverteilung werden dann die Metallocene kombiniert.

Unter Einbezug der Polymerisationsaktivitäten ist man mittels Computersimulation der kombinierten Gelpermeationskurven ohne weiteres in der Lage, über die Art der Metallocene und über das Mengenverhältnis der Metallocene untereinander, jede gewünschte Molmassenverteilung einzustellen.

Unter Einbeziehung der Polymerisationsaktivitäten und Molmassen bei unterschiedlichen Polymerisationstemperaturen, in Gegenwart von Wasserstoff als Molmassenregler oder in Gegenwart von Comonomeren, kann das Rechensimulationsmodell noch weiter verfeinert und die Anwendbarkeit des erfindungsgemäßen Verfahrens noch verbessert werden.

Als Cokatalysator wird ein Aluminoxan der Formel II und/oder III verwendet, wobei n eine ganze Zahl von 0 - 50, bevorzugt 10 - 35, bedeutet.

Bevorzugt sind die Reste R gleich und bedeuten Methyl, Isobutyl, Phenyl oder Benzyl, besonders bevorzugt Methyl.

Sind die Reste R unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R) enthalten sind. Statt des Aluminoxans kann bei der Polymerisation als Cokatalysator eine Mischung bestehend aus Aluminoxan und AIR₃ verwendet werden, wobei B die oben angeführte Bedeutung hat.

Das Aluminoxan kann auf verschiedene Arten nach bekannten Verfahren hergestellt werden. Eine der Methoden ist beispielsweise, daß eine Aluminiumkohlenwasser-stoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R werden entsprechend der gewünschten Zusammensetzung zwei verschiedene Aluminiumtrialkyle (AIR₃ + AIR'₃) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocene vor dem Einsatz in der Polymerisationsreaktion jeweils getrennt oder zusammen als Mischung mit einem Aluminoxan der Formel (II) und/oder (III) vorzuaktivieren. Dadurch wird die Polymerisationsaktivität deutlich erhöht und die Kornmorphologie verbessert.

Die Voraktivierung der Metallocene wird in Lösung vorgenommen. Bevorzugt werden dabei die Metallocene als Feststoff in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol oder ein C₆-C₁₀-Kohlenwasserstoff verwendet.

Die Konzentration des Aluminoxans in der Lösung liegt im Bereich von ca.1Gew.-% bis zur Sättigungsgrenze, vorzugsweise von 5 bis 30 Gew.-%, jeweils bezogen auf die Gesamtlösung. Die Metallocene können in der gleichen Konzentration eingesetzt werden, vorzugsweise-werden sie jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x= 1,2 oder 3, R= Alkyl oder Aryl, gleich oder verschieden, und R'= Aryl, das auch fluoriert oder teilfluoriert sein kann. In diesem Fall besteht der Katalysator aus dem Reaktionsprodukt der Metallocene mit einer der genannten Verbindungen (vgl. EP-A 277 004).

Zur Entfernung von im Olefin vorhandener Katalysatorgifte ist eine Reinigung mit einem Aluminiumalkyl, beispielsweise AIMe₃ oder AIEt₃ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise 20 bis 80°C durchgeführt. Polymerisiert oder copolymerisiert werden Olefine der Formel R^{a}-CH =CH-R^{b}. In dieser Formel sind R^{a} und R^{b} gleich oder verschieden und bedeuten ein Wasserstoffatom oder einen Alkylrest mit 1 bis 14 C-Atomen. R^{a} und R^{b} können jedoch auch mit-den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere werden Propylen und Ethylen polymerisiert.

Als Molmassenregler wird, falls erforderlich, Wasserstoff zugegeben. Unterschiedliche Wasserstoffansprechbarkeit der Metallocene, sowie die Möglichkeit, die Wasserstoffmenge während der Polymerisation zu verändern kann zu einer weiteren gewünschten Verbreiterung der molmassenverteiiung führen.

Der Gesamtdruck im Polymerisationssystem beträgt 0,5 bis 100 bar. Bevorzugt ist die Polymerisation in dem technisch besonders interessanten Druckbereich von 5 bis 64 bar.

Dabei werden die Metallocene in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminiumoxan oder die Mischung Aluminoxan/AlR₃ wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff, als solcher sei beispielsweise Butan, Pentan, Hexan, Heptan, Decan, Isooctan, Cyclohexan, Methylcyclohexan, genannt.

Weiterhin kann eine Benzin- bzw. hydrierte Dieselölfraktion benutzt werden Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das Verfahren zeichnet sich dadurch aus, daß die beschriebenen Metallocene im technisch interessanten Temperaturbereich zwischen 20 und 80°C mit hoher Polymerisationsaktivität Polymere mit breiter, bimodaler oder multimodaler Molmassenverteilung, hoher Molmasse, hoher Stereospezifität und guter Kornmorphologie erzeugen.

Diese Polymere eignen sich besonders gut zur Herstellung von Folien, insbesondere transparenter Folien, Tiefziehanwendungen, Polyolefinschäume, Extrusionsanwendungen sowie für die Herstellung transparenter Hohlkörper und für das Hohlkörperblasformen allgemein.

Die nachfolgenden Beispiele sollen die Erfindung näher erläutern.

Es bedeuten

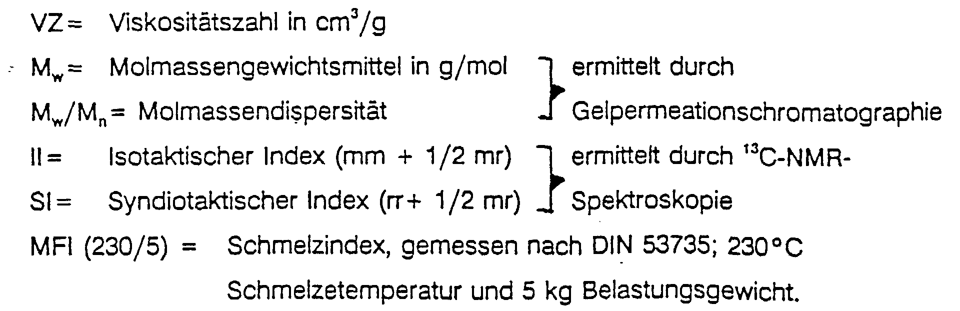

### Beispiel 1

Ein trockener 24-dm³-Reaktor wurde mit Stickstoff gespült und mit 12 dm³ flüssigem Propylen befüllt. Dann wurden 39 cm³ toluolische Methylaluminoxanlösung (entsprechend 52 mmol AI, mittlerer Oligomerisierungsgrad des Methylaluminoxans war n = 19) zugegeben, und der Ansatz wurde 15 Minuten bei 30°C gerührt.

Parallel dazu wurden 13,5 mg (0,025 mmol) rac-Phenyl(methyl)silyl(2-methyl-1-indenyl)₂zirkondichlorid und 51,0 mg (0,10 mmol) rac-Phenyl(methyl)silyl(1-indenyl)-zirkondichlorid in 15 cm³ toluolischer Methylaluminoxanlösung (20 mmol) aufgelöst und nach 15 Minuten in den Reaktor gegeben.

Bei 30°C wurden 3 h polymerisiert. Beendet wurde die Polymerisation durch Zugabe von 12 l CO₂-Gas. Es wurden 1,85 kg Polypropylen, entsprechend einer Aktivität der Metallocenmischung von 9,6 kg PP/g Metallocen x h, erhalten.
VZ = 331 cm³/g; M_{w} = 411000 g/mol, M_{w}/Mₙ = 8,5; II = 96,9 %.

### Beispiel 2

Beispiel 1 wurde wiederholt, als Metallocenmischungskomponente wurden jedoch 5,4 mg (0,010 mmol) rac-Phenyl(methyl)silyl(2-methyl-1-indenyl)₂zirkondichlorrid und 5,4 mg (0,013 mmol) Dimethylmethylen(9-fluorenyl)(cydopentadienyl)zirkondichlorid eingesetzt, die Polymerisationstemperatur war 70°C, und die Polymerisationszeit betrug 1 h.

Es wurden 2,2 kg einer Mischung aus etwa zwei Teilen isotaktischem und einemTeil syndiotaktischem Polypropylen, entsprechend einer Aktivität der
Metallmischung von 203,7 kg PP/g Metallocen x h, erhalten.
VZ = 172 cm³/g; M_{w} = 186500 g/mol, M_{w}/Mₙ = 3,0.

### Beispiel 3

Beispiel 1 wurde wiederholt, als Metallocenmischungskomponenten wurden jedoch 4,8 mg (0,01 mmol) rac-Me₂Si(2-methyil-1-indenyl)₂zirkondichlorid und 21,2 mg (0,05 mmol) rac-Me₂Si(2,3,5-trimethylcyclopentadienyl)₂zirkondichlorid eingesetzt und die Polymerisationstemperatur betrug 50 °C.

Es wurden 2,57 kg Polypropylen, entsprechend einer Aktivität der Metallocenmischung von 32,9 kg PP/g Metallocen x h, erhalten.
VZ = 194 cm³/g; M_{w} = 261000 g/mol, M_{w}/Mₙ = 7,9, II = 98,5 %.

### Beispiel 4

Beispiel 1 wurde wiederholt, als Metallocenmischungskomponente wurden jedoch 4,5 mg (0,008 mmol) rac-Phenyl(methyl)silyl(2-methyl-1-indenyl)₂zirkondichlorid und 6,6 mg (0,015 mmol) rac rac-Dimethylsilyl(indenyl)₂zirkondichlorid eingesetzt. Die Polymerisationszeit war eine Stunde, und die Polymerisationstemperatur betrug 50°C.

Es wurden 1,35 kg Polypropylen, entsprechend einer Aktivität der Metallocenmischung von 121,6 kg PP/g Metallocen x h erhalten.
VZ = 154 cm³/g; M_{w} = 133000 g/mol, M_{w}/Mₙ = 5,2, II = 96,0 %.

### Beispiel 5

Beispiel 1 wurde wiederholt, als Metallocenmischungskomponenten wurden jedoch 2,4 mg (0,005 mmol) rac-Dimethylsilyl(2-methyl-1-indenyl)₂zirkondichlorid und 2,5 mg (0,005 mmol) rac-Dimethylgermyl(indenyl)₂zirkondichlorid verwendet. Die beiden Metallocene wurden getrennt in jeweils 7,5 cm³ toluolischer Methylaluminoxanlösung aufgelöst, nach 15 Minuten wurden diese Lösungen in das Polymerisationssystem eindosiert. Es wurde bei 70°C 1 h polymerisiert.

Es wurden 1,57 kg Polypropylen, entsprechend einer Aktivität des Metallocensystems von 320,4 kg PP/g Metallocen x h erhalten.
VZ = 105 cm³/g; M_{w} = 114000 g/mol, M_{w}/Mₙ = 4,1, II = 96,3 %.

### Beispiel 6

Beispiel 5 wurde wiederholt, als Metallocene wurden jedoch 4,8 mg (0,01 mmol) rac-Dimethylsilyl(2-methyl-1-indenyl)₂zirkondichlorid und 1,5 mg (0,004 mmol) rac-Dimethylsilyl(indenyl)₂zirkondimethyl verwendet.

Es wurden 2,08 kg Polypropylen, entsprechend einer Aktivität des Metallocensystems von 330,2 kg PP/g Metallocen x h erhalten.
VZ = 121 cm³/g; M_{w} = 101900 g/mol, M_{w}/Mₙ = 4,0, II = 96,0 %.

### Beispiel 7

Beispiel 5 wurde wiederholt, als Metallocene wurden jedoch 2,7 mg (0,005 mmol) rac-Phenyl(methyl)silyl(2-methyl-1-indenyl)₂zirkondichlorid und 20,5 mg (0,04 mmol) rac-Phenyl(vinyl)silyl(indenyl)₂zirkondichlorid verwendet.

Es wurden 2,17 kg Polypropylen, entsprechend einer Aktivität des Metallocensystems von 93,5 kg PP/g Metallocen x h erhalten.
VZ = 102 cm³/g; M_{w} = 79400 g/mol, M_{w}/Mₙ = 3,3, II = 96,9 %.

### Beispiel 8

Beispiel 5 wurde wiederholt, als Metallocene wurden jedoch 4,8 mg (0,01 mmol) rac-Dimethylsilyl(2-methyl-1-indenyl)₂zirkondichlorid und 9,2 mg (0,02 mmol) 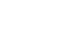 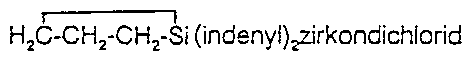 verwendet.

Es wurden 1,82 kg Polypropylen, entsprechend einer Aktivität des Metallocensystems von 130 kg PP/g Metallocen erhalten.
VZ = 145 cm³/g; M_{w} = 185500 g/mol, M_{w}/Mₙ = 3,6, II = 96,8 %.

### Beispiel 9

Beispiel 5 wurde wiederholt, als Metallocene wurden jedoch 2,7 mg (0,005 mmol) rac-Phenyl(methyl)silyl(2-methyl-1-indenyl)₂zirkondichlorid und 2,4 mg (0,006 mmol) rac-Dimethylsilyl(2,4-dimethylcyclopentadienyl)₂zirkondichlorid verwendet.

Es wurden 1,31 kg Polypropylen, entsprechend einer Aktivität des Metallocensystems von 256,9 kg PP/g Metallocen x h erhalten.
VZ = 118 cm³/g; M_{w} = 129500 g/mol, M_{w}/Mₙ = 3,8, II = 98,0 %.

### Beispiel 10

Beispiel 1 wurde wiederholt, als Metallocene wurden jedoch 26,9 mg (0,05 mmol) rac-Phenyl(methyl)silyl(2-methyl-1-indenyl)₂zirkondichlorid und 32,5 mg (0,08 mmol) rac-Dimethylsilyl(2,4-dimethylcyclopentadienyl)₂zirkondichlorid verwendet. Die Polymerisationszeit war 2 h. Es wurden 2,32 kg Polypropylen, entsprechend einer
Aktivität des Metallocensystems von 19,5 kg PP/g Metallocen x h, erhalten.
VZ = 386 cm³/g; M_{w} = 436000 g/mol, M_{w}/Mₙ = 7,2, II = 98,5 %.

### Beispiel 11

Ein trockener 24-dm³-Reaktor wurde mit Stickstoff gespült und mit 24 N dm³ Wasserstoff sowie 12 dm³ flüssigem Propylen befüllt.

Dann wurden 10 ml einer toluolischen Trimethylaluminiumlösung (entsprechend 26 mmol AIMe₃) zugegeben und der Ansatz 15 Minuten bei 40°C gerührt.

Parallel dazu wurden 5,4 mg (0,01 mmol) rac-Phenyl(methyl)silyl(2-methyl-1-indenyl)₂zirkondichlorid und 4,9 mg (0,01 mmol) rac-Dimethylgermyl(indenyl)₂-zirkondichlorid in 15 cm³ Methylaluminoxanlösung (20 mmol Al, Toluol) aufgelöst und nach 15 Minuten in den Reaktor gegeben. Der Reaktorinhalt wurde in 3 Minuten auf 65°C gebracht und bei dieser Temperatur wurde eine Stunde polymerisiert.

Durch Zugabe von 12 l CO₂-Gas wurde die Polymerisation gestoppt, überschüssiges Pröpyfen abgegast und das Polymerpulver bei 80°C/100 mbar getrocknet.

Es wurden 2,25 kg Polypropylen, entsprechend einer Aktivität der
Metallocenmischung von 218,5 kg PP/g Metallocen x h erhalten.
VZ = 91 cm³/g; M_{w} = 72800 g/mol, M_{w}/Mₙ = 4,6, II = 96,8 %.

### Beispiel 12

Beispiel 1 wurde wiederholt, als Metallocene wurden jedoch 5,4 mg (0,010 mmol) rac-Phenyl(methyl)silyl(2-methyl-1-indenyl)₂zirkondichlorid und 27,0 mg (0,056 mmol) rac-Dimethylsilyl(2-methyl-4,5,6,7-tetrahydro-1-indenyl)₂zirkondichlorid verwendet und die Polymerisationstemperatur war 50°C, die Polymerisationszeit 1,5 h.

Es wurden 1,51 kg Polypropylen, entsprechend einer Aktivität des Metallocensystems von 31,1 kg PP/g Metallocen x h erhalten.
VZ = 187 cm³/g; M_{w} = 132500 g/mol, M_{w}/Mₙ = 4,1, II = 97,6 %.

### Beispiele 13

Beispiel 1 wurde wiederholt, als Metallocene wurden jedoch 4,8 mg (0,010 mmol) rac-Dimethylsilyl(2-methyl-1-indenyl)₂zirkondichlorid und 7,0 mg (0,017 mmol) rac-Ethylen(1-indenyl)₂zirkondichlorid verwendet. Die Polymerisationstemperatur war 50°C und die Polymerisationsdauer 1 h.

Es wurden 1,50 kg Polypropylen, entsprechend einer Aktivität des Metallocensystems von 127,1 kg PP/g Metallocen x h erhalten.
VZ = 125 cm³/g; M_{w} = 129500 g/mol, M_{w}/Mₙ = 5,3, II = 95,4 %.

### Beispiel 14

Beispiel 1 wurde wiederholt, als Metallocene wurden jedoch 6,0 mg (0,010 mmol) rac-Diphenylsilyl(2-methyl-1-indenyl)₂zirkondichlorid, 6,0 mg (0,013 mmol) rac-Dimethylsilyl(1-indenyl)₂zirkondichlorid und 36,0 mg (0,083 mmol) rac-Dimethylsilyl(2,3,5-trimethylcyclopentadienyl)₂zirkondichlorid verwendet, die Polymerisationstemperatur betrug 40°C und die Polymerisationsdauer war 2 h.

Es wurden 1,79 kg Polypropylen, entsprechend einer Aktivität des Metallocensystems von 18,6 kg PP/g Metallocen x h erhalten.
VZ = 267 cm³/g; M_{w} = 293000 g/mol, M_{w}/Mₙ = 5,7, II = 98,0 %, MFI (230/5) = 24,6 dgmin⁻¹.

### Beispiel 15

Ein trockener 24-dm³-Reaktor wurde mit Propylen gespült und mit 12 dm³ flüssigem Propylen sowie mit 20 ml einer toluolischen Trimethylaluminiumlösung (entsprechend 52 mmol AIMe₃) befüllt. Der Ansatz wurde bei 30°C 15 Minuten gerührt.

Parallel dazu wurden 3,0 mg (0,005 mmol) rac-Diphenylsilyl(2-methyl-1-indenyl)₂zirkondichlorid, 2,0 mg (0,004 mmol) rac-Dimethylsilyl(2-methyl-1-indenyl)₂zirkondichlorid und 2,0 mg (0,004 mmol) rac-Dimethylgermyl(1-indenyl)₂zirkondichlorid in 20 cm³ Methylaluminoxanlösung (27 mmol Al, Toluol) aufgelöst und nach 15 Minuten in den Reaktor gegeben.
Bei 65°C wurde 1,5 h polymerisiert.

Es wurden 1,59 kg Polypropylen, entsprechend einer Aktivität des Metallocensystems von 151,4 kg PP/g Metallocen x h erhalten.
VZ = 153 cm³/g; M_{w} = 195000 g/mol, M_{w}/Mₙ = 5,8, II = 96,0 %, MFI (230/5) = 87 dgmin⁻¹.

### Beispiel 16

Beispiel 1 wurde wiederholt, als Metallocene wurden jedoch 6,0 mg (0,01 mmol) rac-Diphenylsilyl(2-methyl-1-indenyl)₂zirkondichlorid und 45,0 mg (0,108 mmol) rac-Methylen(3-t-butyl-1-cyclopentadienyl)₂zirkondichlorid verwendet, die Polymerisationstemperatur war 40°C und die Polymerisationsdauer 4 h.

Es wurden 1,63 kg Polypropylen, entsprechend einer Aktivität des
Metallocensystems von 8,0 kg PP/g Metallocen x h erhalten.
VZ = 358 cm³/g; M_{w} = 354000 g/mol, M_{w}/Mₙ = 12,5, II = 93,5 %.

### Beispiel 17

Beispiel 1 wurde wiederholt, als Metallocene wurden jedoch 6,0 mg (0,010 mmol) rac-Diphenylsilyl(2-methyl-1-indenyl)₂zirkondichlorid und 6,0 mg (0,012 mmol) rac-Dimethylsilyl(4,7-dimethyl-1-indenyl)₂zirkondichlorid verwendet, die Polymerisationstemperatur war 40°C, die Polymerisationsdauer 2 h.

Es wurden 0,85 kg Polypropylen, entsprechend einer Aktivität des Metallocensystems von 35,4 kg PP/g Metallocen x h erhalten.
VZ = 324 cm³/g; M_{w} = 352500 g/mol, M_{w}/Mₙ = 15,5, II = 95,3 %.

### Beispiel 18

Beispiel 1 wurde wiederholt, als Metallocene wurden jedoch 6,0 mg (0,010 mmol) rac-Diphenylsilyl(2-methyl-1-indenyl)₂zirkondichlorid und 7,2 mg (0,016 mmol) rac-Ethylen(2-methyl-1-indenyl)₂zirkondichlorid verwendet. Die Polymerisationstemperatur war 50°C, die Polymerisationsdauer 2 h.

Es wurden 1,44 kg Polypropylen, entsprechend einer Aktivität des Metallocensystems von 54,6 kg-PP/g Metallocen x h erhalten.
VZ = 227 cm³/g; M_{w} = 406000 g/mol, M_{w}/Mₙ = 8,0, II = 97,1 %.

### Beispiel 19

Beispiel 18 wurde wiederholt, zusätzlich wurden jedoch während der Polymerisation kontinuierlich 75 g Ethylen zudosiert. Die Polymerisationstemperatur war 60°C und die Polymerisationszeit 1 h.

Es wurden 1,65 kg Ethylen-Propylen-Copolymer, entsprechend einer Aktivität des Metallocensystems von 125,0 kg Copolymer/g Metallocen x h erhalten.
VZ = 291 cm³/g; M_{w} = 387000 g/mol, M_{w}/Mₙ =7,4; 4,2 % Ethylengehalt mit überwiegend isoliert eingebauten Ethyleneinheiten (¹³C-NMR-Analyse).

### Beispiel 20

Beispiel 19 wurde wiederholt, 300 g Ethylen wurden jedoch erst nach 30 Minuten Polymerisationszeit zugegeben.

Es wurden 1,49 kg Copolymer erhalten, entsprechend einer Aktivität des Metallocensystems von 112,9 kg Copolymer/g Metallocen x h.
VZ = 357 cm³/g; M_{w} = 449000 g/mol, M_{w}/Mₙ = 8;8. Das Polymerprodukt läßt sich durch Fraktionierung (Dekan, Diethylether) in einen Polypropylenanteil und einen Ethylen-Propylen-Kautschukanteil auftrennen.
Ethylengehalt des Copolymers 18,4 %.

### Beispiel 21

Ein trockener 150 dm³-Reaktor wurde mit Stickstoff gespült und bei 20°C mit 80 dm³ eines entaromatisierten Benzinschnittes mit dem Siedebereich 100-120°C gefüllt. Dann wurde der Gasraum durch 5-maliges Aufdrücken von 2 bar Propylen und Entspannen stickstofffrei gespült.

Nach Zugabe von 50 I flüssigem Propylen wurden 64 cm³ toluolische Methylaluminoxanlösung (entsprechend 100 mmol Al, Molmasse nach kryoskopischer Bestimmung 990 g/mol) zugegeben und der Reaktorinhalt auf 50°C aufgeheizt.

Durch Zudosierung von Wasserstoff wurde ein Wasserstoffgehalt im Gasraum des Reaktors von 0,1 % eingestellt und später dann durch Nachdosierung während der gesamten Polymerisationszeit gehalten (Überprüfung on-Line durch Gaschromatographie).

15,3 mg rac-Methylethylen(2-methyl-1-indenyl)₂zirkondichlorid (0,033 mmol), 6,3 mg rac-Phenyl(Methyl)silyl(2-methyl-1-indenyl)₂zirkondichlorid (0,012 mmol) und 7,0 mg rac-Diphenylsilyl(2-methyl-1-indenyl)₂zirkondichlorid (0,012 mmol) wurden in 32 ml toluolischer Methylaluminoxanlösung (entsprechend 50 mmol Al) gelöst und nach 15 Minuten in den Reaktor gegeben.

Durch Kühlung wurde der Reaktor 7 h bei 50°C Polymerisationstemperatur gehalten, dann wurde durch Zugabe von 2 barCO₂-Gas die Polymerisation gestoppt und das gebildete Polymere auf einer Drucknutsche vom Suspensionsmedium abgetrennt. Die Trocknung des Produktes erfolgte 24 h bei 80°C/200 mbar. Es wurden 16,4 kg Polymerpulver, entsprechend einer Metallocenaktivität von 81,9 kgPP/g Metallocen x h erhalten.
VZ = 206 cm³/g; M_{w} = 248 000 g/mol; M_{w}/Mₙ = 3,4
II = 97,9 %; MFI (230/5) = 32 g/10 min, Schmp.: 151°C

Das Produkt wies folgende mechanische Daten auf:
Zug-E-Modul (nach DIN 53457-Z) 1430 Nmm⁻²; Kerbschlagzähigkeit (aₖᵥ nach DIN 53453) bei 23°C 5mJmm⁻²; Jzod-Schlagzähigkeit (nach ISO 180/1 C) bei 23°C 69 mJmm⁻² und bei -30°C 12 mJmm⁻²; Jzod-Kerbschlagzähigkeit (nach ISO 180/1 A) bei 23°C 3 mJmm⁻² und bei -30°C 2 mJmm⁻²; Kugeldruckhärte (Preßkörper, getempert, 358 N) 84 Nmm⁻² und Kugeldruckhärte (Spritzkörper, 358 N, nach DIN 53456) 75 Nmm⁻².

### Beispiele 22

Beispiel 21 wurde wiederholt, die Metallocenmischung bestand jedoch aus 6,3 mg rac-Phenyl(Methyl)silyl(2-methyl-1-indenyl)₂-zirkondichlorid (0,012 mmol) und 2,9 mg rac-Dimethylsilyl(1-indenyl)₂zirkondichlorid (0,006 mmol). Für die Polymerisation wurde kein Wasserstoff verwendet.
Nach 20 h wurde die Polymerisation beendet.
Es wurden 18,7 kg Polymerpulver, entsprechend einer Metallocenaktivität von 101,6 kgPP/g Metallocen x h erhalten.
VZ = 202 cm³/g; M_{w} = 296 000 g/mol, M_{w}/Mₙ = 7,9; II = 96,4 %;
MFI (230/5) = 39 g/10 min; Schmp. = 148°C.
Das Produkt wies folgende mechanische Daten auf:
Zug-E-Modul (nach DIN 5347-Z) 1280 Nmm⁻²; Kerbschlagzähigkeit (aₖᵥ nach DIN 53453) bei 23°C 3 mjmm⁻²; Jzod-Schlagzähigkeit (nach ISO 180/1 C) bei 23°C 65 mJmm⁻² und bei -30°C 11 mJmm⁻²; Jzod-Kerbschlagzähigkeit (nach ISO 180/1 A) bei 23°C 3 mJmm⁻² und bei -30°C 2 mJmm⁻²; Kugeldruckhärten 77 Nmm⁻² (Preßkörper, getempert, 358 N) und 71 Nmm⁻² (Spritzkörper, 358 N, nach DIN 53 456).

## Patentansprüche

1. Katalysator enthaltend
a) ein Zirkonocen der Formel Ia 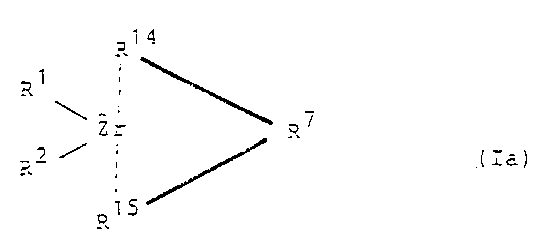 worin
R¹ und R² gleich oder verschieden sind und ein Wasserstoffatom, eine C₁-C₁₀-Alkylgruppe, eine C₁-C₁₀-Alkoxygruppe, eine C₅-C₁₀-Arylgruppe, eine C₅-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R⁷ 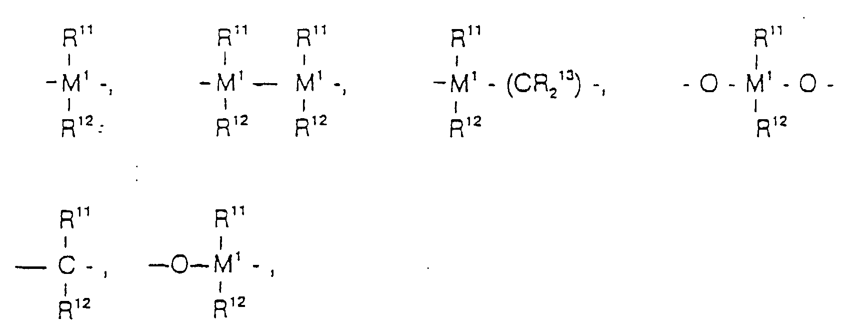 =BR¹¹, =AIR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstofatom, ein Halogenatom, eine C₁-C₁₀-Alkylgruppe, C₁-C₁₀-Fluoralkylgruppe, eine C₅-C₁₀-Arylgruppe, eine C₆-C₁₀-Fluorarylgruppe, eine C₁-C₁₀-Alkoxygruppe,
eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹und R¹³ jeweils mit den sie verbindenden Atomen einen Ring bilden,
M¹ Silizium, Germanium oder Zinn ist,
R¹⁴ und R¹⁵ gleich oder verschieden sind und einen Indenylrest bedeuten, welcher noch zusätzliche Substituenten in der Bedeutung von R¹¹ trägt, und
b) ein Aluminoxan der Formel II 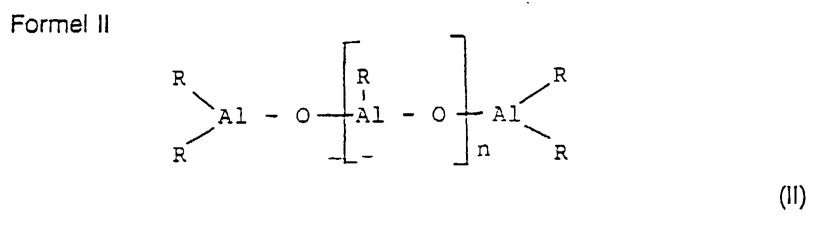 für den linearen Typ und/oder der Formel III 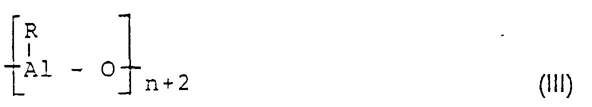 für den cyclischen Typ, wobei in den Formeln II und III die Reste R gleich oder verschieden sein können und eine C₁-C₆-Alkylgruppe, eine C₁-C₆-Fluoralkylgruppe, eine C₆-C₁₈-Arylgruppe, eine C₁-C₆-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung AIR₃ besteht, worin das Zirkonocen vorpolymerisiert oder auf einem Träger aufgebracht ist.

2. Katalysator gemäß Anspruch 1, worin in dem Zirkonocen der Formel Ia R⁷ 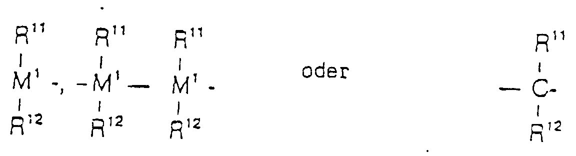 ist, wobei R¹¹ und R¹² gleich oder verschieden sind und ein Wasserstoffatom,-ein Halogenatom, eine C₁-C₁₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄ₒ-Arylalkenylgruppe oder eine C₇-C₄₀-Alkylarylgruppe bedeuten, oder R¹¹ und R¹² jeweils zusammen mit den sie verbindenden Atomen einen Ring bilden und M¹ Silizium, Germanium oder Zinn ist.

3. Katalysator gemäß Anspruch 1 oder 2, worin in dem Zirkonocen der Formel la die Indenylreste R¹⁴ und R¹⁵ noch zusätzliche Substituenten tragen, welche ein Halogenatom, eine C₁-C₁₀Alkylgruppe, eine C₁-C₁₀-Fluoralkylgruppe, eine C₆C₁₀-Arylgruppe, eine C₆-C₁₀-Fluorarylgruppe eine C₁-C₁₀-Alkoxygruppe, eine C₂-C₁₀-Alkenylgruppe, eine C₇-C₄₀-C₇-C₄₀-Arylalkylgruppe, eine C₈-C₄₀-Arylalkenylgruppe oder eine C₇-C₄₀-Alkylarylgruppe bedeuten.

4. Katalysator gemäß einem oder mehreren der Ansprüche 1 bis 3, worin in dem Zirkonocen der Formel la die Indenylreste R¹⁴ und R¹⁵ noch zusätzliche Substituenten tragen, welche ein Halogenatom, eine C₁-C₁₀-Alkylgruppe und eine C₆-C₁₀-Arylgruppe bedeuten.

## Claims

1. A catalyst comprising
a) a zirconocene of the formula Ia 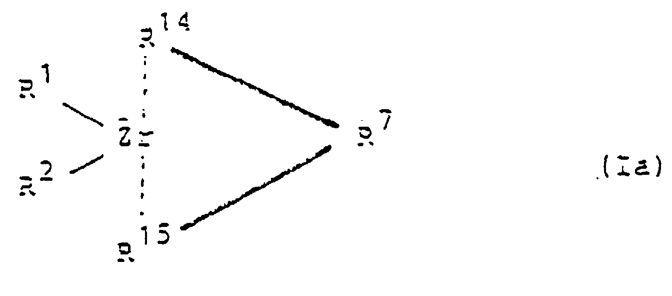 in which
R¹ and R¹¹ are identical or different and are a hydrogen atom, a C₁-C₁₀-alkyl group, a C₁-C₁₀-alkoxy group, a C₅-C₁₀-aryl group, a C₅-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R⁷ is 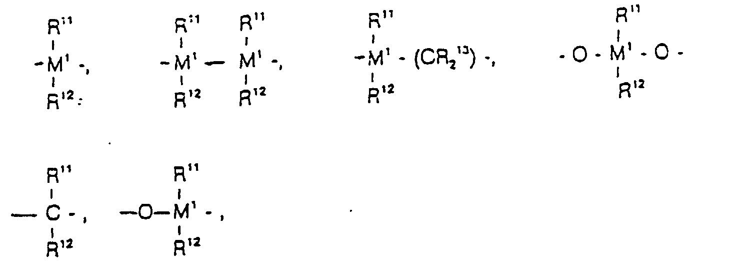 =BR¹¹, =AlR¹¹, -Ge-, -Sn-, -0-, -S-, =SO, =SO₂,
-NR¹¹, =CO =PR¹¹ or =P(O)R¹¹, where
R¹¹, R¹² and R¹³ are identical or different and are a hydrogen atom, a halogen atom, a C₁-C₁₀-alkyl group, C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹² or R¹¹ and R¹³, in each case together with the atoms connecting them, form a ring, and
M¹ is silicon, germanium or tin,
R¹⁴ and R¹⁵ are identical or different and are an indenyl radical which also carries additional substituents as defined for R¹¹, and
b) an aluminoxane of the formula II 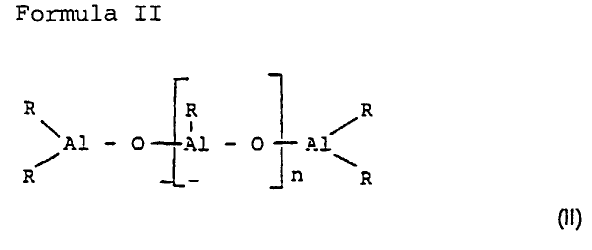 for the linear type and/or of the formula III 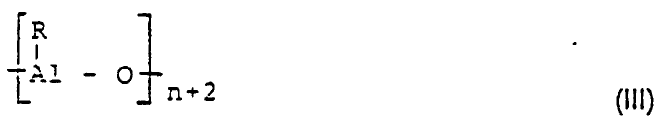 for the cyclic type, where, in the formulae II and III, the radicals R may be identical or different and are a C₁-C₆-alkyl group, a C₁-C₆-fluoroalkyl group, a C₆-C₁₈-aryl group, a C₁-C₆-fluoroaryl group or hydrogen, and n is an integer from 0 to 50, or, instead of the aluminoxane, comprising a mixture of an aluminoxane of the formula II and/or of the formula III with a compound AlR₃, in which the zirconocene is prepolymerized or applied to a support.

2. A catalyst as claimed in claim 1, in which, in the zirconocene of the formula Ia, R⁷ is 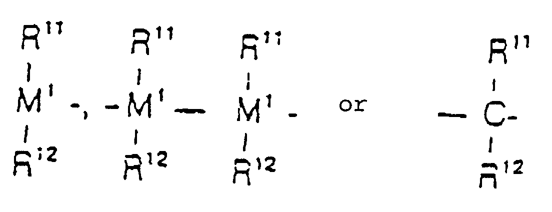 where
R¹¹ and R¹² are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹², in each case together with the atoms connecting them, form a ring, and
M¹ is silicon, germanium or tin.

3. A catalyst as claimed in claim 1 or 2, in which, in the zirconocene of the formula Ia, the indenyl radicals R¹⁴ and R¹⁵ also carry additional substituents which are a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group.

4. A catalyst as claimed in one or more of claims 1 to 3, in which, in the zirconocene of the formula Ia, the indenyl radicals R¹⁴ and R¹⁵ also carry additional substituents which are a halogen atom, a C₁-C₁₀-alkyl group and a C₆-C₁₀-aryl group.

## Revendications

1. Catalyseur contenant
a) un zirconocène de la formule la 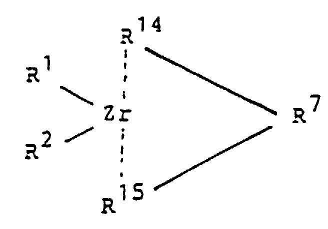 dans laquelle
R¹ et R² sont identiques ou différents et représentent un atome d'hydrogène, un radical alkyle en C₁-C₁₀, un radical alcoxy en C₁-C₁₀, un radical aryle en C₅-C₁₀, un radical aryloxy en C₅-C₁₀, un radical alcényle en C₂-C₁₀, un radical arylalkyle en C₇-C₄₀, un radical alkylaryle en C₇-C₄₀, un radical arylalcényle en C₈-C₄₀ ou un atome d'halogène,
R⁷ représente 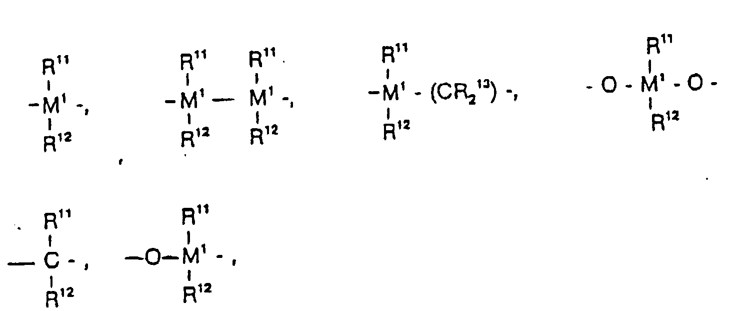 =BR¹¹, =AIR¹¹, -Ge-, -Sn-, -O-, -S-, =SO, =SO₂, =NR¹¹, =CO, PR¹¹ ou =P(O)R¹¹,
où
R¹¹ et R¹² sont identiques ou différents et représentent un atome d'hydrogène, un atome d'halogène, un radical alkyle en C₁-C₁₀, un radical fluoroalkyle en C₁-C₁₀, un radical aryle en C₅-C₁₀, un radical fluoroaryle en C₅-C₁₀, un radical alcoxy en C₁-C₁₀, un radical alcényle en C₂-C₁₀, un radical arylalkyle en C₇-C₄₀, un radical arylalcényle en C₈-C₄₀, un radical alkylaryle en C₇-C₄₀, ou bien R¹¹ et R¹² ou R¹¹ et R¹³ forment un noyau avec les atomes qui les relient,
M¹ représente le silicium, le germanium ou l'étain,
R¹⁴ et R¹⁵ sont identiques ou différents et représentent un reste indényle, portant encore des substituants additionnels de la signification de R¹¹, et
b) un aluminoxane de la formule II 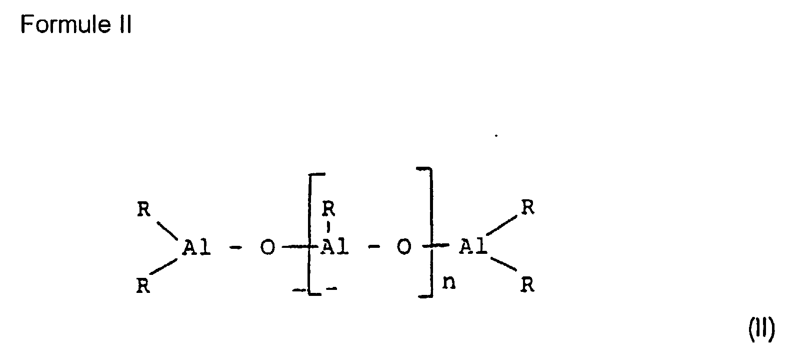 pour le type linéaire et/ou de la formule III 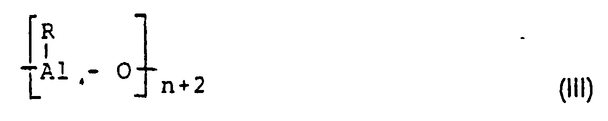 pour le type cyclique, où dans les formules II et III les restes R peuvent être identiques ou différents et représentent un radical alkyle en C₁-C₆, un radical fluoroalkyle en C₁-C₆, un radical aryle en C₆-C₁₈, un radical fluoroaryle en C₁-C₆, ou de l'hydrogène, et n est un nombre entier de 0 à 50, constitué, au lieu de l'aluminoxane, d'un mélange d'un aluminoxane de la formule II et/ou de la formule III avec un composé AIR₃, où le zirconocène est prépolymérisé ou appliqué sur un support.

2. Catalyseur selon la revendication 1, où dans le zirconocène de la formule la, R⁷ représente 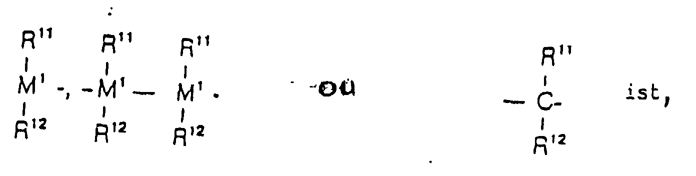 où R¹¹ et R¹² sont identiques ou différents et représentent un atome d'hydrogène, un atome d'halogène, un radical alkyle en C₁-C₁₀, un radical fluoroalkyle en C₁-C₁₀, un radical aryle en C₆-C₁₀, un radical fluoroaryle en C₆-C₁₀, un radical alcoxy en C₁-C₁₀, un radical alcényle en C₂-C₁₀, un radical arylalkyle en C₇-C₄₀, un radical arylalcényle en C₈-C₄₀ ou un radical alkylaryle en C₇-C₄₀, ou bien R¹¹ et R¹² forment à chaque fois ensemble un noyau avec les atomes qui les relient, et M¹ représente le silicium, le germanium ou l'étain.

3. Catalyseur selon la revendication 1 ou 2, où dans le zirconocène de la formule la, les restes indényle R¹⁴ et R¹⁵ portent encore des substituants additionnels, qui représentent un atome d'halogène, un radical alkyle en C₁-C₁₀, un radical fluoroalkyle en C₁-C₁₀, un radical aryle en C₆-C₁₀, un radical fluoroaryle en C₆-C₁₀, un radical alcoxy en C₁-C₁₀, un radical alcényle en C₂-C₁₀, un radical arylalkyle en C₇-C₄₀, un radical arylalcényle en C₈-C₄₀ ou un radical alkylaryle en C₇-C₄₀.

4. Catalyseur selon une ou plusieurs des revendications 1 à 3, où, dans le zirconocène de la formule la, les restes indényle R¹⁴ et R¹⁵ portent encore des substituants additionnels qui représentent un atome d'halogène, un radical alkyle en C₁-C₁₀ et un radical aryle en C₆-C₁₀.
